Europäisches Patentamt

(19) European Patent Office

Office européen des brevets

(11) Veröffentlichungsnummer: **0 091 053**

**A1**

(12) # EUROPÄISCHE PATENTANMELDUNG

(21) Anmeldenummer: **83103047.3**

(22) Anmeldetag: **28.03.83**

(51) Int. Cl.³: **B 01 J 2/00**
**C 09 C 3/00, F 26 B 11/04**
**F 26 B 1/00, C 09 B 67/00**

(30) Priorität: **07.04.82 DE 3212965**

(43) Veröffentlichungstag der Anmeldung:
**12.10.83 Patentblatt 83/41**

(84) Benannte Vertragsstaaten:
**CH DE FR GB LI**

(71) Anmelder: **BAYER AG**
**Zentralbereich Patente, Marken und Lizenzen**
**D-5090 Leverkusen 1, Bayerwerk(DE)**

(72) Erfinder: **Mölls, Hans-Heinz, Dr.**
**Max-Beckmann-Strasse 29**
**D-5090 Leverkusen 1(DE)**

(72) Erfinder: **Kaspar, Vaclav**
**Morgengraben 2**
**D-5000 Koeln 80(DE)**

(72) Erfinder: **Vosteen, Bernhard, Dr.**
**Roggendorfstrasse 49**
**D-5000 Koeln 80(DE)**

(72) Erfinder: **Dehmel, Georg, Dr.**
**Jakob-Böhme-Strasse 6**
**D-5000 Koeln 80(DE)**

(72) Erfinder: **Hörnle, Reinhold, Dr.**
**Hufelandstrasse 42**
**D-5000 Koeln 80(DE)**

(72) Erfinder: **Wolf, Karlheinz, Dr.**
**Paul-Klee-Strasse 77**
**D-5090 Leverkusen 1(DE)**

(54) **Verfahren zur Herstellung von Granulaten wasserunlöslicher Feststoffe.**

(57) Verfahren zur Herstellung von Granulaten wasserunlöslicher Feststoffe, dadurch gekennzeichnet, daß man einen nicht-thixotropen Preß- oder Filterkuchen des Feststoffs unter Schneiden zerkleinert, und man das erhaltene Produkt in einem Schüttguttrockner unter rollender Bewegung trocknet.

**EP 0 091 053 A1**

Croydon Printing Company Ltd

BAYER AKTIENGESELLSCHAFT    5090 Leverkusen, Bayerwerk

Zentralbereich
Patente, Marken und Lizenzen   PG/by/bo/c

Verfahren zur Herstellung von Granulaten wasserunlöslicher Feststoffe

Die Erfindung betrifft ein Verfahren zur Herstellung von
Granulaten wasserunlöslicher Feststoffe, insbesondere
wasserunlöslicher Farbstoffe oder Pigmente.

Wasserunlösliche Farbstoffe und Pigmente werden für die
Anwendung in nicht-wäßrigen Medien wie Lösungsmittel,
.filmbildende Materialien, plastische Massen oder Kunststoffe oder auch zum Zwecke der Rauchanfärbung, vorwiegend in weitgehend wasserfreier Form in den Handel
gebracht. Da die meisten dieser Farbmittel, beispielsweise die des besonders wichtigen Azotyps in wäßrigem
Medium hergestellt werden, müssen sie aus dem Reaktionsgemisch durch mechanische Vorentwässerung, z.B. Filtrieren,
Abpressen usw. isoliert und gegebenenfalls durch Auswaschen von Nebenprodukten gereinigt werden. Diese
nicht fließfähigen Pigment-Wasser-Gemische werden anschließend getrocknet.

Bei der in üblicher Weise durchgeführten Trocknung
in Schicht, z.B. auf Horden, Walzen usw. und anschließender Trockenmahlung fallen dabei Pulver an, die sehr volu-

Le A 21 448

minös sind (Schüttvolumina bis 12 ccm/g) und sehr stark stauben. Auch etwa im Schaufeltrockner unter Umwälzen getrocknete Farbmittel dieser Art stauben sehr stark. Ebenso liefert die Zerstäubungstrocknung dieser Preßkuchen in einer Zweistoffdüse nach dem in Chem. Ing. Techn. 31, S. 259, 1959 beschriebenen Verfahren, bei welchem ein aus dem unvorbehandelten, nicht fließfähigen Preßkuchen erzeugter Hohlstrang mittels zentral zugeführter Druckluft zerstäubt wird, wie andere Zerstäubungsverfahren, beispielsweise solche, die mit einer hochtourigen Scheibe arbeiten voluminöse und stark staubende Produkte. Auch die mit der Druckdüse zerstäubten Granulate weisen ein hohes Schüttvolumen auf.

Alle Zerstäubungstrockner - Verfahren weisen den Nachteil auf, daß die Dispersionen zum Zerstäuben stark verdünnt werden müssen, was hohe Trocknungskosten bewirkt.

Ein weiteres Verfahren beruht auf der Ausnutzung des nicht fließfähigen, plastischen Zustands des wäßrigen 15-30 Vol.-% Feststoff enthaltenden Preßkuchens wie er von einer Filterpresse anfällt. Der Preßkuchen wird dabei als solcher in Granulatgröße durch eine Extrudiervorrichtung als Stranggranulat in Form größerer Formlinge verformt und möglichst unter Beibehaltung dieser Form getrocknet, wobei manchmal ein vorsichtiges Zerteilen der getrockneten Formlinge nachgeschaltet wird.

Dieses Verfahren weist den Nachteil auf, daß man nur zu grobem Granulat über 2 mm Korngröße gelangt, was be-

Le A 21 448

dingt durch die lange Durchtrocknungszeit eine Verhärtung des Korns verursacht.

Gleichzeitig sind diese Granulate erfahrungsgemäß nicht stabil, d.h. sie zerfallen leicht und die scharfen Kanten der einzelnen Granulatteilchen reiben sich gegenseitig ab, wodurch schnell ein starker Staubanteil entsteht.

Es wurde nun ein Verfahren zur Herstellung von staubarmen sowie freifließenden Granulaten von wasserunlöslichen Feststoffen aus nicht fließfähigen, plastischen, wäßrigen Preßkuchen gefunden, welches die Nachteile der bekannten Verfahren nicht aufweist und ein Granulat mit außergewöhnlich günstigen Eigenschaften hinsichtlich Schüttvolumen, Rieselfähigkeit, Stabilität, Staubfreiheit und Kornweichheit liefert.

Das neue Verfahren zur Herstellung von Granulaten wasserunlöslicher Feststoffe ist dadurch gekennzeichnet, daß man einen nicht-thixotropen Preß- oder Filterkuchen des Feststoffs unter Schneiden zerkleinert, und daß man das erhaltene Produkt in einem Schüttguttrockner unter rollender Bewegung trocknet.

In das erfindungsgemäße Verfahren werden vorzugsweise Preß- oder Filterkuchen eingesetzt, die einen Feststoffanteil von 30 - 90 Gew.-% haben.

Der Preß- oder Filterkuchen wird bevorzugt auf einer Membran-Hochdruckfilterpresse vorzugsweise bei einem Preßdruck von etwa 12 bis etwa 40 bar erzeugt.

Das neue Verfahren eignet sich insbesondere zur Granulierung wasserunlöslicher Farbstoffe und von Pigmenten. Die Farbmittel, die erfindungsgemäß verarbeitet werden können, können den verschiedenartigsten chemischen Klassen angehören. Beispielsweise kommen anorganische Pigmente, organische Pigmente und Ruß in Betracht. Von den organischen Pigmenten seien beispielhaft Azopigmente, Phthalocyaninpigmente, polycyclische Pigmente der Perylen-, Chinacridon-, Anthrachinon- und Dioxazinreihe, Triphenylmethanpigmente und sonstige Pigmente wie beispielsweise Metallkomplexe und Farblacke genannt. Daneben eignet sich das neue Verfahren insbesondere zur Granulierung von in organischen Lösungsmitteln und Kunststoffen löslichen Farbstoffen, Farbstoffen für die Rauchanfärbung und sublimierbaren Dispersionsfarbstoffen.

Weiterhin eignet sich das Verfahren insbesondere auch für die Granulierung von pharmazeutischen Wirkstoffen, Arzneimitteln und Agrochemikalien, insbesondere Pestiziden wie Insektizide, Herbizide, Akarizide, Beizmittel, Fungizide, Molluskizide und Nematizide.

Die Zerkleinerung des Preß- oder Filterkuchens erfolgt vorzugsweise durch Schnitzeln in einer geeigneten Schnitzelvorrichtung insbesondere einem Reibschnitzler. Dabei handelt es sich um ein Zerkleinerungsgerät zum Schnitzeln von schneidbarem Material, wobei ein rotierender Mitnehmer das Material kontinuierlich einem feststehenden Schnitzelzylinder zur Verarbeitung zuführt. Entsprechende Apparate sind handelsüblich (Hersteller z.B. Alexanderwerk Aktiengesellschaft, Remscheid, Deutschland).

Le A 21 448

Das durch Schneiden insbesondere Schnitzeln erhaltene Feuchtgranulat besitzt eine Korngröße von etwa 0,5 bis etwa 15 mm, vorzugsweise von 1 - 3 mm.

Die Trocknung erfolgt in einem Schüttguttrockner unter rollender Bewegung, insbesondere einem Schüttgutkontakttrockner.

Vorzugsweise werden Schüttguttrockner eingesetzt, in denen das zu trocknende Produkt nur mit Teilen in Berührung kommt, die starr miteinander verbunden sind. Besonders geeignet sind Röhrentrockner für indirekte Wärmebehandlung, bei denen zum Gutstransport Wendeln eingebaut sind ("Wendeldrehrohrtrockner").

Ein Wendeldrehrohrtrockner enthält ein System mehrerer Rohre;in jedes Einzelrohr ist eine wandfeste mitdrehende Blechwendel eingezogen. In den Gängen dieser Wendel rutscht das Gut unter fortlaufender Umlagerung nach rechts bzw. links, fällt am Rohrende in das nächste Nachbarrohr usw. Die Beheizung kann mit Dampf, Druckwasser, Wärmeträgeröl oder mit Rauchgasen erfolgen. Die Überlüftung kann mit Luft oder $N_2$ erfolgen.

Für das erfindungsgemäße Verfahren geeignete Schüttguttrockner sind z.B. aus der DE-PS 562 707 und der DE-AS 2 946 904 bekannt.

Man trocknet vorzugsweise bis zu einem Restfeuchtegehalt von etwa 0,1 bis etwa 5 Gew.-%, vorzugsweise kleiner 1 Gew.-%.

Le A 21 448

Das erfindungsgemäße Verfahren kann sowohl diskontinuierlich als auch bevorzugt kontinuierlich durchgeführt werden.

Beispiel 1

Ein Preßkuchen von Pigment Yellow 74 (Trockengehalt
= 45 Gew.-%) wird in einem Reibschnitzler (Schlitzweite ca. 3 mm) geschnitzelt. Das resultierende Feuchtgranulat wird dann in einem Röhrentrockner für indirekte
Wärmebehandlung, in dem zum Gutstransport Wendeln eingebaut sind ("Wendeldrehrohrtrockner"; effektive Rohrlänge ca. 6 m, Rohrinnendurchmesser: 342 mm, Gesamtheizfläche: ca. 50 m², spezifische Verdampfungsleistung
6 kg $H_2O$/m² bei 50 pm) getrocknet. Die Heizmitteltemperatur betrug 135°C, Füllungsgrad 33 Vol-%, die Leistung
ca. 300 kg Trockensubstanz/h. Das getrocknete Granulat
ist bei einer Restfeuchte von 0,17 Gew.-% gut rieselfähig
und staubarm.

Beispiel 2

Wird unter den gleichen Bedingungen wie in Beispiel 1,
ein Preßkuchen von Pigment Orange 34, mit einer Anfangsfeuchte von 62 %, ebenfalls bei 135°C getrocknet, so
erhält man ein rieselfähiges, staubarmes Granulat.
Die Restfeuchte betrug 0,2 %.

Le A 21 448

Patentansprüche

1. Verfahren zur Herstellung von Granulaten wasserunlöslicher Feststoffe, dadurch gekennzeichnet, daß man einen nicht-thixotropen Preß- oder Filterkuchen des Feststoffs unter Schneiden zerkleinert, und man das erhaltene Produkt in einem Schüttguttrockner unter rollender Bewegung trocknet.

2. Verfahren zur Herstellung von Pigmentgranulaten gemäß Anspruch 1.

3. Verfahren zur Herstellung von Granulaten wasserunlöslicher Farbstoffe gemäß Anspruch 1.

4. Verfahren gemäß den Ansprüchen 1-3, dadurch gekennzeichnet, daß man den Preß- oder Filterkuchen schnitzelt.

5. Verfahren gemäß den Ansprüchen 1-4, dadurch gekennzeichnet, daß man einen Preß- oder Filterkuchen mit 30-90 Gew.-% Feststoffanteil einsetzt.

6. Verfahren gemäß den Ansprüchen 1-5, dadurch gekennzeichnet, daß man in einem Schüttgutkontakttrockner trocknet.

7. Verfahren gemäß den Ansprüchen 1-6, dadurch gekennzeichnet, daß man in einem Schüttguttrockner,

Le A 21 448

in dem das zu trocknende Gut nur mit Teilen in
Berührung kommt, die starr miteinander verbunden
sind, trocknet.

8. Verfahren gemäß den Ansprüchen 1-7, dadurch gekennzeichnet, daß man in einem Röhrentrockner
für indirekte Wärmebehandlung, in den zum Gutstransport Wendeln eingebaut sind, trocknet.

Le A 21 448

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| Y | FR-A-2 272 044 (ORGONICS INC.) * Seite 1, Zeilen 25-29; Seite 9, Zeilen 9-18; Seite 10, Zeile 22 - Seite 14, Zeile 35; Figur 1 * | 1,5,6 | B 01 J 2/00 C 09 C 3/00 F 26 B 11/04 F 26 B 1/00 C 09 B 67/00 |
| | --- | | |
| Y | US-A-3 401 654 (M. REICHERT) * Spalte 3, Zeilen 1-54; Abbildung * | 1,4 | |
| | --- | | |
| Y | US-A-2 438 450 (K.J. NELSON) * Spalte 3, Zeilen 24-71; Abbildung * | 1 | |
| | --- | | |
| D,Y | DE-B-2 946 904 (W. KELLER) * Spalte 1, Zeilen 3-18; Abbildungen 1,2 * | 6-8 | |
| | --- | | RECHERCHIERTE SACHGEBIETE (Int. Cl. ³) |
| D,Y | DE-C- 562 707 (DEMAG AG.) * Seite 3, Zeilen 55-94; Abbildungen 1,2 * | 6,7 | B 01 J C 09 C F 26 B C 09 B |
| | ----- | | |

Der vorliegende Recherchenbericht wurde für alle Patentansprüche erstellt.

| Recherchenort DEN HAAG | Abschlußdatum der Recherche 07-07-1983 | Prüfer PYFFEROEN K. |
|---|---|---|